# EUROPÄISCHE PATENTSCHRIFT

(11) **EP 0 894 948 B1**
(45) Veröffentlichungstag und Bekanntmachung des Hinweises auf die Patenterteilung: **15.01.2003**
(21) Anmeldenummer: 97810537.7
(22) Anmeldetag: 28.07.1997
(51) Int. Cl.: F01K 23/10

(54) **Kombinierte Gas-Dampf-Kraftwerksanlage mit Zwangsdurchlaufdampferzeuger**
Combined gas-steam power plant with once-through steam generator
Centrale combinée à gaz et à vapeur avec générateur de vapeur à passage unique

(43) Veröffentlichungstag der Anmeldung: 03.02.1999
(73) Patentinhaber: ALSTOM (Switzerland) Ltd, 5401 Baden (CH)
(72) Erfinder: Liebig, Erhard, Dr., 71254 Ditzingen (DE)

(56) Entgegenhaltungen:
- EP-A- 0 475 212
- EP-A- 0 561 220
- EP-A- 0 777 036
- DE-A- 19 544 225
- PATENT ABSTRACTS OF JAPAN vol. 011, no. 054 (M-563), 19.Februar 1987 & JP 61 215407 A (HITACHI LTD), 25.September 1986,

## Beschreibung

### Technisches Gebiet

Die Erfindung betrifft eine kombinierte Gas-Dampf-Kraftwerksanlage mit einem Gasturbinenkreislauf und einem Dampfturbinenkreislauf, wobei die Abgase einer Gasturbine ihre Restwärme über das in einem Zwangsdurchlaufdampferzeuger strömende Arbeitsmittel an eine Dampfturbine abgeben.

### Stand der Technik

Der Wasserdampfkreislauf der derzeitigen Kombianlagen wird ausnahmslos mit unterkritischen Parametern gefahren. Der Abhitzekessel zur Nutzung der Abwärme der Gasturbinen wird in der Regel mit Trommelkessel, mit Zwangdurchlaufkessel oder mit Kombinationen davon ausgeführt. Bei grossen hocheffizienten Anlagen gelangen zum Teil Mehrdruckanlagen mit Zwischenüberhitzung zur Anwendung. Gegenüber konventionell gefeuerten Kesseln ist indes die Rauchgastemperatur bei Abhitzekesseln begrenzt. Insbesondere die Verdampfung, welche bei konstanter Temperatur vor sich geht, führt zu thermodynamischen und technischen Auslegungszwängen.

Gegenwärtig werden Abhitzekessel zur Nutzung der Abwärme von Gasturbinenanlagen in der Regel mit Trommelkesseln ausgeführt. Die Reinigung des Wasser-Dampfkreislaufes erfolgt über die Aufkonzentration in der jeweiligen Trommel und eine kontinuierliche oder diskontinuierliche Abschlämmung der Trommel. Die Aufkonzentration erfolgt dadurch, dass das Wasser in der Kesseltrommel verdampft. Nicht-flüchtige Substanzen verbleiben somit im Kesselwasser und konzentrieren sich zunehmend auf. Mit der Abschlämmung des Kesselwassers werden die Substanzen damit in konzentrierter Form und effizient aus dem Kreislauf entfernt. Dem Trommelwasser wird ausserdem in vielen Fällen zur Einstellung des pH-Wertes im Kessel ein festes Alkalisierungsmittel wie Trinatriumphosphat oder Natriumhydroxid zugesetzt.

Sind die Abhitzekessel jedoch mit einem einfachen Zwangsdurchlaufkessel versehen, so entfällt dieser Reinigungsmechnismus, da ein solcher Kessel nicht abgeschlämmt werden kann. Die Reinigung des Wasser-Dampfkreislaufes wird in diesem Fall in einer Kondensatreinigungsanlage vollzogen, in welcher das Kondensat vor der Einführung in den Dampferzeuger filtriert und gegebenenfalls mittels lonenaustauschern zusätzlich entsalzt wird.

Sind die Abhitzekessel hingegen mit einem Zwangsdurchlaufkessel mit Abscheideflasche versehen, können die Verunreinigungen aus dieser Abscheideflasche wie bei einem Trommelkessel abgezogen werden, wenn die Abscheideflasche unter bestimmtem Bedingungen betrieben wird.

Ein Problem stellen allerdings bei beiden Kesselarten viele unerwünschte Substanzen wie z.B. Chloride und Sulfate dar, die in flüchtiger Form vorliegen, im Beispiel als HCI oder als H₂SO₄. Dies gilt auch im Fall der üblichen Kreislaufkonditionierung mit Ammoniak in Form von flüchtigen Ammoniumchloriden oder von Ammoniumsulfaten. Solche Stoffe können zu Korrosion und in der Folge zu Betriebsstörungen und Schäden führen.

Ein mit Trommelkessel im Niederdrucksystem und mit Zwangsdurchlaufkessel im Hochdrucksystem arbeitender Abhitzedampferzeuger ist bekannt aus der EP-A1 0 359 735. Um die Anlage einfacher und wirtschaftlicher zu gestalten, übt bei dieser Anlage die Trommel auch die Funktion des Speisewasserbehälters/Entgasers aus. Hierzu ist die Dampftrommel mit einer integrierten Entgasung versehen.

*EP-A1 0 777 036 offenbart einen Mehrdruckabhitzekessel mit mindestens einem Umlaufdampferzeuger, bestehend aus einem Niederdruckeconomiser, einer Niederdrucktrommel und einem Niederdruckverdampfer sowie mindestens einem Zwangsdurchlaufdampferzeuger, bestehend aus einem Hochdruckeconomiser, einem Hochdruckverdampfer und einem Hochdrucküberhitzer. Zum Schutz gegen Korrosion und Bildung von Ablagerungen sind in die Anlage eine Sauerstoff- und eine Ammoniakzugabe integriert.*
*Beide Druckstufen dieser Anlage sind in Reihe geschaltet. Die Reihenschaltung der beiden verfahrenstechnisch unterschiedlichen Verdampfersysteme bedingt zwangsläufig zwei wasserchemisch unterschiedliche Fahrweisen.*
*Niederdrucktrommel und Kondensator fungieren innerhalb des Systems als Speisewasserspeicher. Die Gewährleistung der Funktion als Wasserspeicher verlangt nach einer entsprechend grossen Auslegung der Niederdrucktrommel.*

### Darstellung der Erfindung

Ausgehend von diesem bekannten Abhitzedampferzeuger liegt der Erfindung die Aufgabe zugrunde, eine Anlage zu schaffen, die *die Anzahl der erforderlichen Bauelemente durch Beschränkung* auf die thermodynamisch erforderlichen Elemente des Wasser-Dampf-Kreisprozesses *reduziert* und damit zu einer weiteren beträchtlichen Kostenreduzierung führt.

Erfindungsgemäss wird dies mit den Merkmalen des *unabhängigen* Patentanspruchs erreicht.

*Die erfindungsgemässe Anlage kommt ohne Kondensatreinigungsanlage, ohne Speisewasserbehälter*/*Entgaser und ohne Dampftrommel aus. Hierbei wird ausgegangen einerseits von der Tatsache, dass bisher bei Zwangsdurchlaufkesseln strikt auf die Dosierung mit nichtflüchtigen Konditionierungsmitteln verzichtet wird, da diese sich in den überhitzten Kesselteilen ablagern würden, und andererseits von der Erkenntnis, dass sich bei Trommelkesseln infolge der Zugabe von Alkalisierungsmitteln die Flüchtigkeit der genannten Chloride und Sulfate drastisch verringert, so dass diese beispielsweise bei Phosphatkonditionierung des Kesselwassers gut abgeschlämmt werden können.*
Die Vorteile der Erfindung sind *daher* unter anderem in einer beträchtlichen Senkung der Anlagen- und Betriebskosten zu sehen, in der Risikoverminderung infolge Fehlens einer chemischen Anlage im Wasser-Dampfkreislauf sowie in einer extremen Systemvereinfachung, wodurch eine Verbesserung der Zuverlässigkeit und der Verfügbarkeit zu erwarten ist.

### Kurze Beschreibung der Zeichnung

In der Zeichnung ist ein Ausführungsbeispiel der Erfindung schematisch anhand einer kombinierten Gas-Dampf-Kraftwerksanlage dargestellt. Es sind nur die für das Verständnis der Erfindung wesentlichen Elemente gezeigt. Die Strömungsrichtung der Arbeitsmittel ist mit Pfeilen dargestellt.

### Weg zur Ausführung der Erfindung

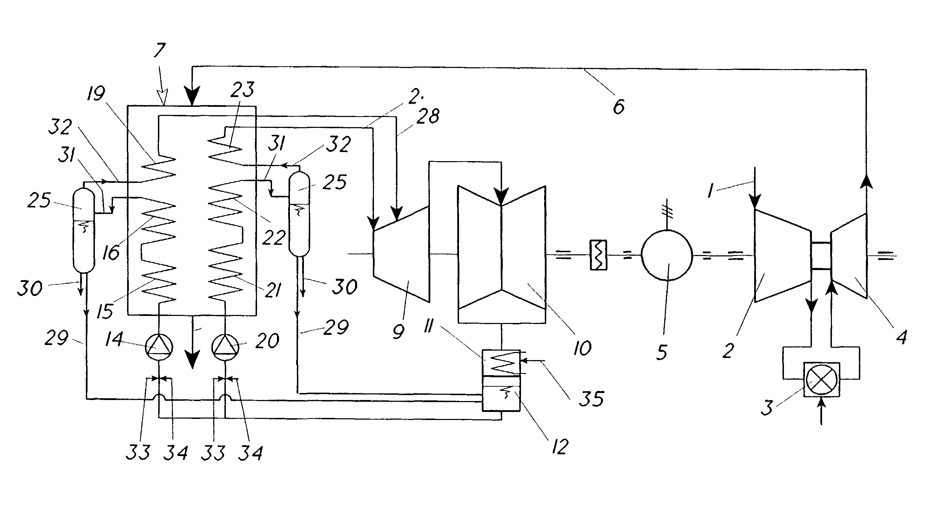

Gemäss Figur 1 wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 auf der gleichen Welle mit der Gasturbine angeordnet. Der in der Niederdruckturbine 10 entspannte Arbeitsdampf kondensiert in einem Kondensator 11. Das Kondensat wird aus dem Hotwell 12 mittels Pumpe 14, 20 direkt in den Dampferzeuger 7 gefördert. Bemerkenswert ist, dass die Anlage weder mit einer Kondensatreinigungsanlage noch mit einem in der Regel dampfbeheizten Speisewasserbehälter/Entgaser ausgerüstet ist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen. Ebenso ist die Anzahl der Druckstufen im Beispielsfall ohne Belang.

Das Niederdrucksystem ist als Zwangsdurchlaufsystem ausgeführt. Es besteht im Rauchgasweg des Kessels aus einem Niederdruckeconomiser 15, in den das Kondensat über eine Speisepumpe 14 eingeleitet wird, einem Niederdruckverdampfer 16 und einem Niederdrucküberhitzer 19. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 zugeführt. Der überhitzte Dampf wird über eine Frischdampfleitung 24 in den Hochdruckteil 9 der Dampfturbine überführt.

Zur Phasentrennung ist in beiden Systemen je eine Abscheideflasche 25 vorgesehen, in welche der Austritt der Verdampfer 16, 22 über eine Leitung 31 mündet. Die Abscheideflasche ist an ihrem obereren Ende über eine Leitung 32 mit dem Überhitzer 19, 23 verbunden. An ihrem unteren Ende sind die Flaschen mit je einer Rückführleitung 29 versehen, welche in den Hotwell 12 mündet. An ihrem unteren Ende sind die Flaschen zusätzlich mit je einer Abschlämmleitung 30 versehen, über welche die Verunreinigungen abgezogen werden. Die dort abgezogenen Mengen werden durch Zusatzwasser ersetzt, welches bei 35 in den Kondensator eingegeben wird.

Die Abscheideflasche sorgt dafür, dass der Überhitzer jederzeit trocken bleibt und am Kesselaustritt frühzeitig überhitzter Dampf zur Verfügung steht. Sobald im Hochdruckverdampfer 22 der für einen stabilen Betrieb notwendige Druck erreicht ist, kann der Frischdampf zum Anfahren der Dampfturbine im Gleitdruckbetrieb verwendet werden.

Gemäss der Erfindungsaufgabe soll nun grundsätzlich auf eine Kondensatreinigungsanlage verzichtet werden können. Dem liegt die Überlegung zugrunde, dass die Verunreinigungen im Dampf/Wasserkreislauf im Bereich der Abscheideflaschen 25 abgezogen werden können.

Die Reinigung des Dampf/Wasserkreislaufes kann sowohl bei Vollast als auch bei Teillast erfolgen. Bei Vollast wird das Hochdrucksystem überspeist, d.h. es wird über die Hochdruckspeisepumpe 20 eine grössere Menge Wasser als erforderlich durch den Zwangsdurchlauf-Dampferzeuger gefördert. Es versteht sich, dass im Falle einer einzigen Hochdruckspeisepumpe diese für die Mehrmenge entsprechend grösser ausgelegt sein muss. Ist die Anlage mit einer Pumpenredundanz versehen, beispielsweise in Form von 2 x 100% oder 3 x 50%, so kann die Ersatzpumpe zur Überspeisung herangezogen werden.

Die geförderte Wassermenge wird so eingestellt, dass auf jeden Fall Nassdampf in die Flasche 25 gelangt. In den Wassertröpfchen des Wasser-Dampf-Gemisches sind die Verunreinigungen gebunden. In der Flasche wird der Wasseranteil des Dampfes durch geeignete Mittel separiert und über die Abschlämmleitung 29 abgezogen. Von Vorteil bei diesem Verfahren ist, dass der Kreislauf bereits nach wenigen Durchläufen, d.h. innert kürzester Zeit, weitgehend von Verunreinigungen befreit ist.

Eine Variante, bei welcher die Kreislaufreinigung mit der für den Normalbetrieb dimensionierten Speisepumpe erfolgen kann, besteht darin, den Dampferzeuger Teillast, beispielsweise 80%, zu betreiben. Danach wird wie beim Vollastverfahren das Hochdrucksystem überspeist und nach dem oben beschriebenen Verfahren vorgegangen.

Es wird nun eine Massnahme geschaffen, die die Flüchtigkeit der vorhandenen Substanzen herabsetzt, und damit deren Ausscheiden aus dem Kreislauf erleichtert. Dies erfolgt durch Zudosierung eines Konditionierungsmittels und hat eine vorteilhafte Verringerung des Verteilkoeffizienten zur Folge. Da die oben beschriebene Reinigung des Wasser/Dampf-Kreislaufes über die Abscheideflasche 25 eine zeitlich begrenzte, spezielle Betriebsweise der Anlage verlangt, wird auch nur während dieser Reinigungsperiode, bei welcher die Abscheideflasche nass betrieben wird, die Dosierung von Chemikalien durchgeführt. Die Chemikalien werden stromaufwärts der Speisepumpen 14, 20 mit geeigneten Mitteln bei 34 in die Speiseleitung eingeführt. Mit dieser Massnahme können die beiden Systeme in Funktion ihrer thermischen Zustände unabhängig voneinander dosiert werden.

Die eigentliche Dosierung, d.h. die zu verwendende Chemikalie und deren Menge erfolgt dabei in Abhängigkeit von der Art der Verunreinigung und deren Grades. Die Dosierung erfolgt kontinuierlich während des ganzen Reinigungsprozesses. Die für den Normalbetrieb vorhandene Ammoniakdosierung (NH₃) und Sauerstoffdosierung (O₂-Gas), welche bei 33 ebenfalls stromaufwärts der Speisepumpen 14, 20 erfolgt, wird während der Reinigung mit Konditionierungsmitteln eingestellt. Dies ist indes keine absolute Bedingung, sondern abhängig von der Art der Verunreinigung und damit des zu verwendenden Konditionierungsmittels.

Aus alldem ergibt sich, dass im Normalbetrieb die Abscheideflasche 25 trocken ist und keine Dosierung von Chemikalien zur Herabsetzung der Flüchtigkeit gewisser Verunreinigungen erfolgt. Hingegen muss zum Reinigen bei Vollast oder bei Teillast Nassdampf in die Flasche gelangen. Nach dem oben beschriebenen Verfahren gelangt die notwendige Feuchte in die Flasche, in dem das System überspeist wird, was durch Erhöhen des Speisewassermassenstromes und/oder durch Zurückfahren der Gasturbine erreicht wird. Die anlässlich dieses Reinigungsvorganges durchgeführte Herabsetzung der Flüchtigkeit mittels Chemikalien verbessert den Abscheidegrad, was insbesondere hinsichtlich der flüchtigen Substanzen wesentlich ist. Die Massnahme führt ausserdem zu einer Verkürzung des Reinigungsvorganges.

Die Eintrittstemperatur in den Kessel entspricht im gezeigten Fall der Kondensattemperatur, da kein dampfbeheizter Speisewasserbehälter/Entgaser vorgesehen ist. Mit Vorteil wird die Materialwahl für die sogenannten Vorwärmflächen des Zwangsdurchlaufdampferzeugers in Abhängigkeit des Gasturbinen-Brennstoffes und insbesondere dessen Schwefelgehaltes sowie in Abhängigkeit der Kondensattemperatur getroffen, um Taupunktkorrosion vorzubeugen. Mit sinkender wasserseitiger Eintrittstemperatur einerseits und/oder zunehmendem Schwefelgehalt andererseits kann von einfachem Kohlenstoffstahl über niedriglegierten Stahl zu rostfreiem Stahl übergegangen werden.

Selbstverständlich ist die Erfindung nicht auf die gezeigte und beschriebene Anlage beschränkt. Ihre Anwendung ist unabhängig vom Typ und der Bauweise des Abhitzekessels und der Dampfturbinenanlage, vom Kondensationssystem, vom Vorhandensein einer Zwischenüberhitzung, von der Gasturbinenanlage sowie vom gewählten Anfahrprozess. In Abweichung zur gezeigten und beschriebenen Anordnung ist ein liegender Kessel anwendbar.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Niederdruckturbine
- 11: Kondensator
- 12: Hotwell
- 14: Speisewasserpumpe
- 15: Niederdruckeconomiser
- 16: Niederdruckverdampfer
- 19: Niederdrucküberhitzer
- 20: Speisewasserpumpe
- 21: Hochdruckeconomiser
- 22: Hochdruckverdampfer
- 23: Hochdrucküberhitzer
- 24: Frischdampfleitung
- 25: Reinigungs-Abscheideflasche
- 28: Niederdruck-Dampfleitung
- 29: Rückführleitung
- 30: Abschlämmleitung
- 31: Leitung zwischen 16 resp. 22 und 25
- 32: Leitung zwischen 25 und 19 resp. 23
- 33: Dosierung im Normalbetrieb
- 34: Dosierung im Reinigungsbetrieb
- 35: Zusatzwasser

## Patentansprüche

1. Kombinierte Gas-Dampf-Kraftwerksanlage mit einem Gasturbinenkreislauf und einem Dampfturbinenkreislauf, wobei die Abgase einer Gasturbine (4) ihre Restwärme über das in einem Zwangsdurchlaufdampferzeuger (7) strömende Arbeitsmittel an eine Dampfturbine (9;10) abgeben und die Entgasung des Arbeitsmittels im Hotwell (12) des Dampfturbinenkondensators (11) vorgenommen wird, wobei zwischen den Verdampfungsflächen (16;22) und den Überhitzungsflächen (19;23) *des Zwangsdurchlaufdampferzeugers (7)* Abscheideflaschen (25) zum Abschlämmen der Verunreinigungen angeordnet sind, **dadurch gekennzeichnet, dass** das entgaste Arbeitsmittel unmittelbar aus dem Hotwell (12) des Kondensators (11) über eine Speisepumpe (14;20) in die Vorwärmflächen (15;21) des Zwangsdurchlaufdampferzeugers (7) eingeführt wird.

2. Kombinierte Gas-Dampf-Kraftwerksanlage nach Anspruch 1, **dadurch gekennzeichnet, dass** stromauf der Speisepumpe (14;20) Mittel (33) zur Ammoniak- und Sauerstoffdosierung im Normalbetrieb und Mittel (34) zur Zudosierung eines Konditionierungsmittels im Reinigungsbetrieb angeordnet sind.

## Claims

1. Combined cycle power plant with a gas turbine circuit and a steam turbine circuit, the exhaust gases from a gas turbine (4) transferring its residual heat to a steam turbine (9, 10) via the working medium flowing in a once through steam generator (7), and the deaeration of the working medium being carried out in the hot well (12) of the steam turbine condenser (11), separating bottles (25) for the blowdown of impurities being arranged between the evaporation surfaces (16, 22) and the superheating surfaces (19, 23) of the once through steam generator (7), **characterized in that** the deaerated working medium is introduced directly from the hot well (12) of the condenser (11) via a feed pump (14, 20) into the preheating surfaces (15, 21) of the once through steam generator (7).

2. Combined cycle power plant according to Claim 1, **characterized in that** means (33) for metering ammonia and oxygen during normal operation and means (34) for metering a conditioning agent in the cleaning mode are arranged upstream of the feed pump (14, 20).

## Revendications

1. Centrale thermique combinée à gaz et à vapeur avec un circuit de turbine à gaz et un circuit de turbine à vapeur, dans laquelle les gaz brûlés d'une turbine à gaz (4) cèdent leur chaleur résiduelle à une turbine à vapeur (9; 10) par l'intermédiaire du fluide de travail circulant dans un générateur de vapeur à passage forcé unique (7) et le dégazage du fluide de travail est effectué dans le ballon d'eau chaude (12) du condenseur (11) de la turbine à vapeur, dans laquelle des bouteilles de séparation (25) sont disposées entre les surfaces d'évaporation (16; 22) et les surfaces de surchauffe (19; 23) du générateur de vapeur à passage forcé unique (7) en vue de la séparation des impuretés, **caractérisée en ce que** le fluide de travail dégazé est introduit directement à partir du ballon d'eau chaude (12) du condenseur (11) par une pompe d'alimentation (14; 20) dans les surfaces de préchauffage (15; 21) du générateur de vapeur à passage forcé unique (7).

2. Centrale thermique combinée à gaz et à vapeur suivant la revendication 1, **caractérisée en ce que** des moyens (33) destinés au dosage de l'ammoniaque et de l'oxygène en fonctionnement normal et des moyens (34) destinés à l'addition dosée d'un agent de conditionnement en fonctionnement de nettoyage sont disposés en amont de la pompe d'alimentation (14; 20).
